# EUROPÄISCHE PATENTSCHRIFT

(11) **EP 3 085 971 B1**
(45) Veröffentlichungstag und Bekanntmachung des Hinweises auf die Patenterteilung: **28.07.2021**
(21) Anmeldenummer: 16165949.5
(22) Anmeldetag: 19.04.2016
(51) Int. Cl.: F16B 5/02, F16B 31/04

(54) **FORMSCHLÜSSIGES VERBINDUNGSELEMENT FÜR BAUTEILVERBINDUNGEN**
POSITIVE-FIT CONNECTING ELEMENT FOR COMPONENT COMPOUNDS
ÉLEMENT DE LIAISON A ENGAGEMENT POSITIF POUR LIAISONS DE COMPOSANTS

(30) Priorität: 21.04.2015 DE 102015106107
(43) Veröffentlichungstag der Anmeldung: 26.10.2016
(73) Patentinhaber: Köllges, Ralf, 41812 Erkelenz (DE)
(72) Erfinder: Köllges, Ralf, 41812 Erkelenz (DE)
(74) Vertreter: Patentanwälte Bauer Vorberg Kayser

(56) Entgegenhaltungen:
- US-A- 3 835 615
- US-A- 4 048 898
- US-A- 4 685 188
- None

## Beschreibung

Die Erfindung bezieht sich auf eine Einheit aus einem formschlüssiges Verbindungselement für Bauteilverbindungen, eine dazugehörige Spannvorrichtung und aus mindestens einem Bauteil, das eine zylindrische Bohrung aufweist, in der sich das Verbindungselement befindet. Insbesondere bezieht sich die Erfindung auf zwei Bauteile, die jeweils eine Bohrung aufweisen und ein formschlüssiges Verbindungselement, das sich in diesen Bohrungen befindet und die beiden Bauteile miteinander verbindet.

Üblicherweise werden für derartige Bauteilverbindungen Schraubenverbindungen eingesetzt. Das formschlüssige Verbindungselement ist als Alternative zu Schraubenverbindungen anzusehen.

Aus DE 2 938 476 A1 ist die Verbindung zweier Bauteile in Form jeweils eines Wellenflanschs durch ein Verbindungselement, das allerdings nicht formschlüssig ist, bekannt. Eine Konushülse mit einem konischen Innenmantel und einem zylindrischen Außenmantel befindet sich innerhalb der beiden Flanschbohrungen der Wellenflansche. Innerhalb der Konushülse ist ein Kegelbolzen angeordnet, der einen äußeren Kegelmantel aufweist. Dieser Kegelmantel ist in flächigem Kontakt mit dem konischen Innenmantel. Wird eine axiale Zugkraft, vorzugsweise durch eine hydraulische Spannvorrichtung, aufgebracht, die den Kegelbolzen relativ zur Konushülse in die Richtung zieht, in der sich der kleinste Durchmesser der Konushülse befindet, bewegt sich der Konus relativ zur Hülse und spreizt diese radial nach außen, bis mindestens eine der Flanschbohrungen flächig kontaktiert und ausgefüllt ist, also ein Presssitz erreicht ist. Auf diese Weise ist es möglich, die Flanschbohrungen praktisch zu 100% mit hochfestem Metall auszufüllen. In der Regel bleibt die Konushülse stationär. Die Konushülse und auch der Kegelbolzen haben jeweils einen axialen Schraubbolzen, der sich außerhalb der Bohrungen befindet. Auf diese Schraubbolzen wird jeweils eine Mutter aufgeschraubt, dadurch werden die beiden Bauteile in Axialrichtung zusammengepresst. Das Verbindungselement selbst aus Konushülse und Kegelbolzen kann keine axialen Kräfte bewirken und aufnehmen.

Eine Weiterentwicklung dieses Verbindungselementes ist in DE 103 08 242 B4 beschrieben.

Nachteilig bei diesen Verbindungselementen ist es, dass sich außerhalb der eigentlichen Bohrungen Teile des Verbindungselementes befinden. Insoweit besteht kein Unterschied zu einer Schraubverbindung, bei der auf der einen Seite der Bolzenkopf und auf der anderen Seite eine Mutter mit Bolzenende aus der mindestens einen Bohrung vorstehen. Muttern und Bolzen- bzw. Schraubenkopf benötigen Platz. Sie haben zudem ein Gewicht, das sich beispielsweise bei Bewegungen in einer erhöhten Trägheit bemerkbar macht. Schraubverbindungen können fest fressen, sie sind häufig nur schwer lösbar, insbesondere nach einigen Jahren.

Aus der US 4 048 898 A ist eine Einheit aus a) einem nicht demontierbaren und erst in einer Spannposition formschlüssigen Verbindungselement für Bauteilverbindungen bekannt, das eine Konushülse, die eine Längsachse der Konushülse, die einen konischen Innenmantel, die eine quer zur Längsachse verlaufende Abstützfläche, und die einen zylindrischen Außenmantel hat, welcher eine Oberfläche aufweist, und das einen Kegelbolzen aufweist, der einen äußeren Kegelmantel, welcher in flächigem Kontakt mit dem konischen Innenmantel ist, und der ein erstes Kupplungsteil hat, aus b) einer axialen Spannvorrichtung, die ein zweites Kupplungsteil, das mit dem ersten Kupplungsteil lösbar verbindbar ist, und die eine Gegenabstützfläche, die mit der Abstützfläche in Kontakt ist, aufweist, wobei das zweite Kupplungsteil relativ zur Gegenabstützfläche axial bewegbar ist und bei einem Spannvorgang eine Relativbewegung zwischen Kegelbolzen und Konushülse stattfindet, wobei sich die Konushülse zwischen einer Anfangsposition vor dem Spannvorgang und einer Spannposition im plastischen Bereich verformt, dabei hat in der Anfangsposition der Außendurchmesser des zylindrischen Außenmantels einen Wert D1 und in der Spannposition einen Wert D2, wobei D2 größer als D1 ist und aus c) einem ersten Bauteil, das eine Bohrung aufweist, in der sich das Verbindungselement befindet, wobei der Innendurchmesser der Bohrung größer als D1, aber kleiner als D2 ist, und wobei im angespannten Zustand des formschlüssigen Verbindungselementes das plastisch verformte Material der Konushülse sich in Anlage an der Bohrung befindet, wobei die Oberfläche des Außenmantels weicher ist als das Material der Bohrung.

US 3 835 615 A und US 4 685 188 A zeigen weitere derartige Einheiten.

Die Erfindung hat es sich zur Aufgabe gemacht, das Verbindungselement nach der DE 2 938 476 A1 bzw. der DE 103 08 242 B4 dahingehend weiterzuentwickeln, dass keine Notwendigkeit besteht, dass das Verbindungselement aus der mindestens einen Bohrung herausragt, sondern sich vollständig in dieser Bohrung befinden kann, dabei sollen die Vorteile des bekannten Verbindungselementes im Vergleich zu Schraubenverbindungen beibehalten werden, insbesondere kein Gewindeschneiden, verringerter Montageaufwand, weniger Verbindungselemente und weniger Platzbedarf für Montage und Demontage, kein Festfressen. Diese Aufgabe wird gelöst durch ein formschlüssiges Verbindungselement für Bauteilverbindungen mit den Merkmalen des Anspruchs 1. Dabei wird die rauhe Oberfläche definiert dadurch, dass sie einer Oberfläche entspricht, wie sie Schleifpapier mit einer Körnung zwischen 50 und 1500, insbesondere zwischen 80 und 1000, Körnungsangabe nach CAMI, aufweist.

Im Unterschied zu dem Verbindungselement nach den beiden genannten DE-Schriften findet während der Expansion der Konushülse eine radiale Verkrallung mit dem Material an der Innenoberfläche der mindestens einen Bohrung statt. Es wird also nicht nur ein Presssitz erreicht, es wird ein Formschluss erreicht. Der zylindrische Außenmantel hat eine strukturierte, unglatte Oberfläche mit einer Rauheit. Strukturiert bedeutet, dass er einem besonderen Fertigungsschritt unterworfen wurde, um die Oberfläche mit Vorsprüngen zu gestalten. Die Oberfläche ist vorzugsweise beschichtet, beispielsweise mit einem Werkstoff wie SiC beschichtet. Sie ist bewusst unglatt ausgebildet. Sie kann eine Mikroverzahnung aufweisen. Entscheidend ist, dass sich möglichst viele lokale Spitzen in eine Innenwand der mindestens einen Bohrung eingraben können. Sie bewirken die formschlüssige Verbindung. Die strukturierte, unglatte Oberfläche ersetzt im Grunde das Gewinde einer Schraubverbindung. Durch die lokalen Spitzen, auch Profilkuppen genannt, die sich in oberflächennahe Bereiche der Innenwand der Bohrung eindrücken bzw. eingraben, wird eine formschlüssige Verbindung erreicht, die ebenso belastbar ist wie eine Schraubenverbindung. Die lokalen Spitzen können punktförmige Spitzen und/oder Grate sein. Grate liegen z.B. bei Schraubgewinde vor.

Durch die Expansion der Konushülse und das dadurch bedingte Eingraben von Vorsprüngen, die die Rauheit bilden, ergeben sich vielfältige Vorteile gegenüber normalen Schraubverbindungen. Es sind keine Schrauben mehr für die Bauteileverbindungen, insbesondere Flanschverbindungen notwendig, dies führt zu erheblichen Kosteneinsparungen. Es ist ein verringerter Fertigungsaufwand gegeben, es werden erheblich weniger Verbindungselemente benötigt. So werden bei einer Flanschverbindung, die beispielsweise 24 M36 Schrauben und Muttern benötigt, lediglich sechs formschlüssige Verbindungselemente benötigt. Es müssen keine Gewinde mehr geschnitten werden, insbesondere nicht Gewinde in Sacklöchern. Bei dem erfindungsgemäßen formschlüssigen Verbindungselement kann eine Bohrung in einem Bauteil eine Sackbohrung sein, die normalerweise vorliegende andere Bohrung im zweiten Bauteil und evtl. weitere Bohrungen in weiteren Bauteilen müssen Durchgangsbohrungen sein. Das formschlüssige Verbindungselement benötigt Zugang von mindestens einer Seite der Bauteilverbindungen.

Es werden Montagezeiten reduziert, dies allein schon wegen der verringerten Anzahl der Verbindungselemente. Besonders vorteilhaft ist, dass das erfindungsgemäße Verbindungselement nicht aus der mindestens einen Bohrung hervorsteht. Es kann zwar vorstehen, muss aber nicht. Im Unterschied zu dem Verbindungselement nach den beiden Patentdokumenten ist keine Schraubverbindung notwendig und kein Überstand aus der Bohrung notwendig.

Vorteilhaft ist, wenn die Verkrallung im angespannten Zustand großflächig ist, sie erstreckt sich vorteilhafterweise auf die gesamte Kontaktfläche zwischen dem zylindrischen, rauen Außenmantel und der Innenwand der Bohrung, so dass diese gesamte Fläche axiale Kräfte aufnehmen kann. Bei einer Schraubverbindung ist nicht immer gewährleistet, dass alle Gewindegänge, die im Eingriff mit einer Mutter sind, auch wirklich tragen, insbesondere gleichmäßig tragen.

Da kein Teil des formschlüssigen Verbindungselementes gegenüber der mindestens einen Bohrung axial vorstehen muss, sondern das Verbindungselement vollständig in der mindestens einen Bohrung befinden kann, wird Raum gespart, es wird Gewicht gespart, es wird auch ein besseres Aussehen erzielt.

Auch nach Jahren des Einsatzes lässt sich das formschlüssige Verbindungselement einfach wieder ausbauen. Es lässt sich vielfach wieder verwenden.

Beim ersten Einsatz in einer Bohrung ist diese Bohrung noch so, wie sie ursprünglich hergestellt wurde. Nach dem ersten Spannvorgang ist die Innenwand der Bohrung aufgeraut, sie ist mehr oder weniger ein Abbild der Oberfläche des zylindrischen Außenmantels. Bei einer Demontage und anschließenden Montage wird die Innenwand der Bohrung erneut verformt. Es finden jeweils plastische Verformungsvorgänge statt. Die Konushülse verformt sich bei den einzelnen Spannvorgängen lediglich im elastischen Bereich. Dadurch nimmt die Konushülse dann, wenn der Spannvorgang zurückgenommen wird, seine ursprünglichen Außendurchmesser mit dem Wert D1 an. Die Spannung wird im allgemeinen mittels einer Lösevorrichtung aufgehoben, die axiale Verschiebung zwischen Kegelbolzen und Konushülse ermöglicht, so dass diese wieder in den Ausgangszustand zurückgebracht werden.

Das formschlüssige Verbindungselement wird bei der Montage lediglich in die mindestens eine Bohrung hineingesteckt. Der Innendurchmesser dieser Bohrung ist geringfügig größer als der Außendurchmesser D1 des zylindrischen Außenmantels im ungespannten Zustand. Dadurch lässt sich die Konushülse mit dem darin befindlichen Kegelbolzen in die Bohrung hineinschieben. Die radiale Expansion während des Spannvorgangs ist nun so, dass die mechanische Erweiterung der Konushülse in Radialrichtung mit der Rauheit der Oberfläche des zylindrischen Außenmantels abgestimmt ist. Ein möglichst wesentlicher Teil des Spannweges, also der Differenz D2 minus D1, soll für ein Eingraben der Profilspitzen der Oberfläche in die Innenwandung der mindestens einen Bohrung verwendet werden. Ein erstes Stück dieses radialen Weges wird dazu benötigt, dass der für das Einschieben des entspannten Verbindungselements notwendige, möglichst geringe Luftspalt (Fügespalt) aufgezehrt wird. Anschließend erfolgt ein Eingraben der Profilspitzen in die Innenwand der Oberfläche. Dies wird wegen Fertigungsungenauigkeiten usw. nicht in allen Bereichen und an allen Orten der Oberfläche im gleichen Maße geschehen, da lokale Abweichungen z.B. in der Größe des Luftspalts usw. vorliegen. Deshalb soll der radiale Weg D2 minus D1 größer sein als die mittlere Rauhtiefe, vorzugsweise mindestens doppelt so groß, insbesondere vierfach so groß sein.

An mindestens einem axialen Endbereich des formschlüssigen Verbindungselements ist eine Schutzkappe vorgesehen. Vorzugsweise sind zwei Schutzkappen, also eine Schutzkappe an jedem Ende des Verbindungselements, vorgesehen. Die Schutzkappen befinden sich vorzugsweise innerhalb der Bohrung. Sie können sich aber auch außerhalb der Bohrung befinden. Die Schutzkappen sind mit der Konushülse und/oder dem Kegelbolzen verbunden, beispielsweise aufgeschraubt. Vorzugsweise ist die Schutzkappe sowohl mit der Konushülse als auch mit dem Kegelbolzen verbunden und dient der Sicherung des axialen Spannzustandes zwischen Konushülse und Kegelbolzen.

Wenn das formschlüssige Verbindungselement Bauteile verbindet, ist die Konushülse im Spannzustand. Dieser Spannzustand muss über die Dauer der Bauteileverbindung aufrechterhalten werden. Der Kegelbolzen hat einen Kegelwinkel. Die Konushülse hat den gleichen Kegelwinkel. Der Winkel ist im Bereich der Selbsthemmung der hier verwendeten Materialien.

Die Kegelhülse ist in ihrem Umfang geschlossen. Sie hat keine Schlitze, Ausnehmungen oder dergleichen. Die Oberfläche ist eine ununterbrochene, einstückig zusammenhängende Oberfläche. Es können zwar an der Oberfläche Löcher vorgesehen sein, diese gehen aber mit ihrer Fläche in die Formschlüssigkeit der Verbindung verloren.

Ferner betrifft die Erfindung ein formschlüssiges Verbindungselement für Bauteilverbindungen, das eine Konushülse, die eine Längsachse der Konushülse, die einen konischen Innenmantel, die eine quer zur Längsachse verlaufende Abstützfläche, und die einen zylindrischen Außenmantel hat, welcher eine strukturierte, rauhe Oberfläche mit Profilspitzen aufweist, und das einen Kegelbolzen aufweist, der einen äußeren Kegelmantel, welcher in flächigem Kontakt mit dem konischen Innenmantel ist, und der ein erstes Kupplungsteil hat, dabei wird die rauhe Oberfläche definiert dadurch, dass sie einer Oberfläche entspricht, wie sie Schleifpapier mit einer Körnung zwischen 50 und 1500, insbesondere zwischen 80 und 1000, Körnungsangabe nach CAMI, aufweist.

Unterhalb D1 = 20 mm, insbesondere unterhalb D1 = 24 mm ist die Herstellung aufwändig und macht ein Einsatz des formschlüssigen Verbindungselements weniger Sinn. Vorzugsweise ist daher D1 größer als 20 mm, insbesondere als 24 mm.

Weitere Vorteile und Merkmale der Erfindung ergeben sich aus den übrigen Ansprüchen sowie aus der nun folgenden Beschreibung von nicht einschränkend zu verstehenden Ausführungsbeispielen der Erfindung, die im Folgenden unter Bezugnahme auf die Zeichnung näher erläutert werden. In dieser Zeichnung zeigen:
- Fig. 1:: ein prinzipielles Querschnittsbild durch das formschlüssige Verbindungselement, durch zwei Bauteile und durch eine axiale Spannvorrichtung, gezeigt ist der Zustand "montiert, ungespannt",
- Fig. 2:: eine Darstellung wie Figur 1, jedoch nunmehr im Zustand "gespannt",
- Fig. 3:: eine Darstellung wie Figur 2, jedoch nunmehr im Zustand "montiert mit Schutzkappe",
- Fig. 4:: eine Darstellung wie Figur 3, jedoch nunmehr im Zustand der Demontage,
- Fig. 5: eine prinzipielle, schematische Darstellung einer Draufsicht auf die Oberfläche der Konushülse eines Verbindungselements, in stark vergrößertem Maßstab,
- Fig. 6:: eine prinzipielle Darstellung eines Schnittbildes entlang des Schnittes VI-VI in Figur 5, bei vergrößertem Maßstab, darüber ein Teilstück eines Bauteils, mit Blick auf eine Bohrung.
- Fig. 7:: das schnittbildliche Teilstück der Konushülse gemäß Figur 6, nunmehr in formschlüssigem Eingriff mit der Wand der Bohrung eines Bauteils.

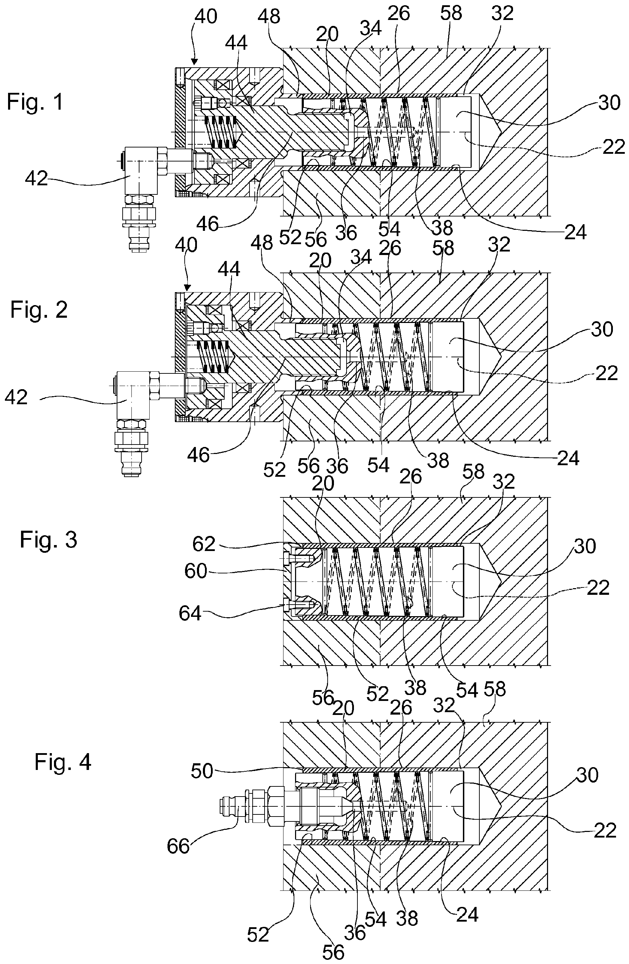

Figur 1 zeigt eine Konushülse 20, die eine Längsachse 22, einen konischen Innenmantel 24 und einen zylindrischen Außenmantel 26 aufweist. Innerhalb dieser Konushülse 20 befindet sich ein Kegelbolzen 30, der gleichachsig zur Konushülse 20 ist. Er hat einen äußeren Kegelmantel 32. Dieser liegt flächig am konischen Innenmantel 24 an. Der Kegelwinkel von Konushülse 20 und Kegelbolzen 30 liegt bei etwa 1,6°. Er liegt im Bereich der Selbsthemmung der verwendeten Materialien. Der Kegelbolzen 30 hat weiterhin ein erstes Kupplungsteil 34, das hier als Gewindebohrung ausgebildet ist. An ihrer tiefsten Stelle befindet sich ein Einlass einer Ölbohrung 36. Diese hat einen Austrittsbereich in Form einer spindelförmig auf dem äußeren Kegelmantel 32 umlaufenden Rinne 38. Die Rinne 38 ist nach außen offen.

Der zylindrische Außenmantel 26 hat eine strukturierte, gezielt und bewußt unglatte Oberfläche mit einer Rauheit, hier im Ausführungsbeispiel gebildet durch eine karbidische Beschichtung, in diesem Falle eine Beschichtung SiC. Grundsätzlich hat die Beschichtung hat eine Vielzahl von vorspringenden Zähnen, die man auch als lokale Spitzen oder Profilkuppen bezeichnen kann. Die Rauheit der Beschichtung liegt im Bereich 1 bis 100 Mikrometer, vorzugsweise 2 bis 50 Mikrometer. Die Härte der Beschichtung liegt bei 70 bis 1000 HV.

Weiterhin ist eine axiale Spannvorrichtung 40 vorgesehen, die hier hydraulisch arbeitet. Es handelt sich im Wesentlichen um eine Zylinder/Kolbeneinheit. Ihr Arbeitsraum ist über einen Anschluss 42 mit einer nicht dargestellten Hydraulikleitung verbunden. Ein Kolben 44 ist mit einem zweiten Kupplungsteil 46 verbunden, dieses ist als Gewindebolzen ausgebildet. Der Gewindebolzen ist in das erste Kupplungsteil 34 eingeschraubt. Ein Zylinder 48 hat einen Anlagering 48, der in Anlage an einer Abstützfläche 50 der Konushülse 20 ist. Es kann auch eine mechanische Spannvorrichtung verwendet werden.

Wird nun ausgehend vom Zustand gemäß Figur 1 der Arbeitsraum der Spannvorrichtung 40 mit Hydrauliköl unter Druck gefüllt, bewegt sich der Kolben 44 in der gezeigten Darstellung nach links. Dadurch wird der Kegelbolzen 30 ebenfalls nach links gezogen, also in Richtung des kleinsten Durchmessers des konischen Innenmantels 24. Es wird ein Spannvorgang durchgeführt.

In der Darstellung gemäß Figur 2 ist der Spannvorgang abgeschlossen. Die Konushülse 20 befindet sich im gespannten Zustand. Sie ist innerhalb des elastischen Bereichs (gemäß Hooke'schem Gesetz) verformt. Dadurch ist sichergestellt, dass bei Rückbewegung des Kegelbolzens 30 die Konushülse 20 wieder die Form annimmt, die sie in Figur 1 hat.

Die Konushülse 20 befindet sich in Bohrungen 52, 54 von zwei miteinander zu verbindenden Bauteilen 56, 58. Im gespannten Zustand gemäß Figur 2 verbindet die Konushülse 20 die beiden Bauteile 56, 58 miteinander. Grundsätzlich ist die Oberfläche des Außenmantels 26 härter als das Material der Bohrung 52 bzw. 54.

Während des Spannvorgangs haben sich die Zähne der Oberfläche des Außenmantels 26 in die Innenwandungen der beiden Bohrungen 52, 54 eingegraben und dort einen Formschluss bewirkt. Das Material der Bauteile 56, 58 hat eine geringere Härte als die strukturierte Oberfläche des zylindrischen Außenmantels 26, so dass die Zähne in das Material des Bauteils 56, 58 eindringen können und dies auch erreicht wird.

Der zylindrische Außenmantel 26 der Konushülse 20 hat beispielsweise einen Durchmesser D1 im entspannten Zustand von 100 mm und ist 170 mm lang. Die Konushülse 20 weitet sich beim Spannvorgang um etwa 0,2 mm aus, der Durchmesser D2 im angespannten Zustand ist somit 0,2 mm größer als D1. Zwischen Konushülse 20 und den Bohrungen 52, 54 wird eine Flächenpressung von ungefähr 100 N/mm² erreicht. Allgemein liegt die Flächenpressung, die erreicht werden kann, zwischen 4 und 500 N/mm²

Man kann das Zusammenwirken der Oberfläche des Außenmantels 26 und der Innenwandung der Bohrungen 52, 54 als reibschlüssige Verbindung auffassen und als einen Fall der Haftreibung betrachten. Die radiale Kraft, mit der die beiden Reibpartner Außenmantel 26 und Innenwand der Bohrungen 52, 54 gegeneinander gedrückt werden, ist die Normalkraft F_{N}. Die Haftreibung µ_{H} zwischen der Paarung aus strukturierter Oberfläche mit Rauheit des zylindrischen Außenmantels 26 und der Innenwand der Bohrungen 52, 54 muss mindestens 0,5 betragen, damit eine axiale Kraft F_{A} kleiner als 0,5 ^{∗} F_{N}, die in Richtung der Längsachse 22 angreift und beispielsweise durch die Spannvorrichtung 40 erzeugt werden könnte, nicht zu einem Gleiten zwischen der Oberfläche des Außenmantels 26 und der Innenwand der Bohrungen 52, 54 führt. Je größer der Wert der Beschreibung µ_{H} ist, umso größere axiale Kraft kann aufgenommen werden. Vorzugsweise sind µ_{H}-Werte von mindestens 0,7, mindestens 0,9 und bevorzugt größer als 1 gegeben. Bei µ_{H} größer als 1 können axiale Kräfte größer als F_{N} aufgenommen werden. Es gilt F_{A} = µ_{H} ^{∗} F_{N}. Es soll noch einmal betont werden, dass es hier um einen analogen Vergleich geht. Tatsächlich findet ein Formschluss statt, wie er bei der idealen Haftreibung eigentlich nicht betrachtet wird.

Figur 3 zeigt den Zustand mit gespannter Einheit aus Konushülse 20 und Kegelbolzen 30. Die axiale Spannvorrichtung 40 ist entfernt. Stattdessen ist eine Schutzkappe 60 mit der Konushülse 20 verbunden. Sie ist kappenförmig und hat einen umlaufenden Rand 62. Mit diesem liegt sie an der Abstützfläche 50 der Konushülse 20 an. Durch Schrauben 64 wird die Schutzkappe 60 am Kegelbolzen 30 gehalten und gegenüber diesem gespannt, so dass der umlaufende Rand 62 kraftflüssig an der Abstützfläche 50 aufliegt. Die Schutzkappe 60 verhindert, dass der Spannzustand verloren geht, also der Kegelbolzen 30 sich der Zeichnung nach rechts in den Zustand, in dem er in Figur 1 ist, bewegen kann.

Die Bohrung 54 im zweiten Bauteil 58 ist als Sackbohrung ausgeführt. Ist sie dagegen als normale Durchgangsbohrung ausgeführt, wie die erste Bohrung 52 im ersten Bauteil 56, so kann auch auf das andere Ende der Einheit aus Konushülse 20 und Kegelbolzen 30 eine Schutzkappe aufgesetzt werden.

In Figur 4 ist die Demontage erläutert. Die Schutzkappe 60 ist entfernt. In das erste Kupplungsteil 34 ist eine Lösevorrichtung 66 eingeschraubt, die ein rohrartiges Anschlussstück hat. Dieses hat einen Fortsatz, der mit dem Einlass der Ölbohrung 36 dicht abschließt. Wird nun Öl in die Lösevorrichtung 66 unter Druck eingegeben, füllt sich die Ölbohrung 36 mit Öl, das Öl tritt im Bereich der Rinne 38 aus, es füllt und und schmiert die Fläche zwischen Kegelbolzen 30 und Konushülse 20. Dadurch kommen diese aus dem Bereich der Selbsthemmung heraus, der Kegelbolzen 30 kann nun in der Zeichnung nach rechts bewegt werden in den Zustand, den er in Figur 1 hat. Die Konushülse 20 nimmt dann wieder ihren Durchmesser D1 an. Sie kann nun mit dem Kegelbolzen 30 aus den Bohrungen 52, 54 entnommen werden, dies insbesondere mit Hilfe der Lösevorrichtung 66.

Die strukturierte, rauhe Oberfläche mit Profilspitzen ist erfindungsgemäß durch eine Oberfläche gebildet, wie sie Schleifpapiere haben. Die Körnung liegt zwischen 50 und 1500, insbesondere zwischen 80 und 1000, Körnungsangabe nach CAMI. Alternativ kann dies in Korngröße in µm angegeben werden, die Korngröße in µm liegt vorzugsweise zwischen 500 und 8 µm, insbesondere zwischen 162 und 18 µm. Die Oberfläche kann dadurch hergestellt sein, dass derartige Körner sich auf der Oberfläche befinden und eine Schicht bilden. Die Oberfläche wird dann durch diese Körner gebildet. Die Körner können aus hartem Material, beispielsweise Aluminiumoxid, Siliziumcarbid, Chrom (III)-Oxid, Zirkonium (IV)-Oxid, technischen Keramikpartikeln usw. bestehen.

Vorzugsweise liegt der mittlere Abstand zweier benachbarter Profilspitzen 70 im Bereich von 10 bis 300 µm, insbesondere von 20 bis 200 µm. Vorzugsweise sind die Profilspitzen 70 spitz, haben also eine nach außen sich verjüngende Geometrie, wie z.B. ein Gewinde oder eine Feile.

Die mindestens eine Bohrung 52, 54 in dem mindestens einen Bauteil 56, 58 ist vorzugsweise zylindrisch ausgeführt. Vorzugsweise ist sie mit hoher Präzision ausgeführt. Die Bohrung 52 bzw. 54 und die Konushülse 20 werden mit H7 und f7 vorzugsweise gefertigt. Je geringer die Toleranz ist, umso geringer ist der Flügelspalt.

Die Profilspitzen 70 sollen möglichst fest mit dem Volumen der Konushülse 20 verbunden sein, damit über sie möglichst viel Kraft übertragen werden kann. Sie dringen in der Regel mehr als 10 µm bei einem Spannvorgang in das Material an der Innenwandung der Bohrung 52, 54 ein. Je mehr Profilspitzen 70 pro Quadratmillimeter vorhanden sind, umso größer sind Verkrallung und Halt. Es wird eine Dichte von mindestens 20 Profilspitzen 70 pro Quadratmillimeter, insbesondere mindestens 100 Profilspitzen 70 pro Quadratmillimeter als vorteilhaft angesehen.

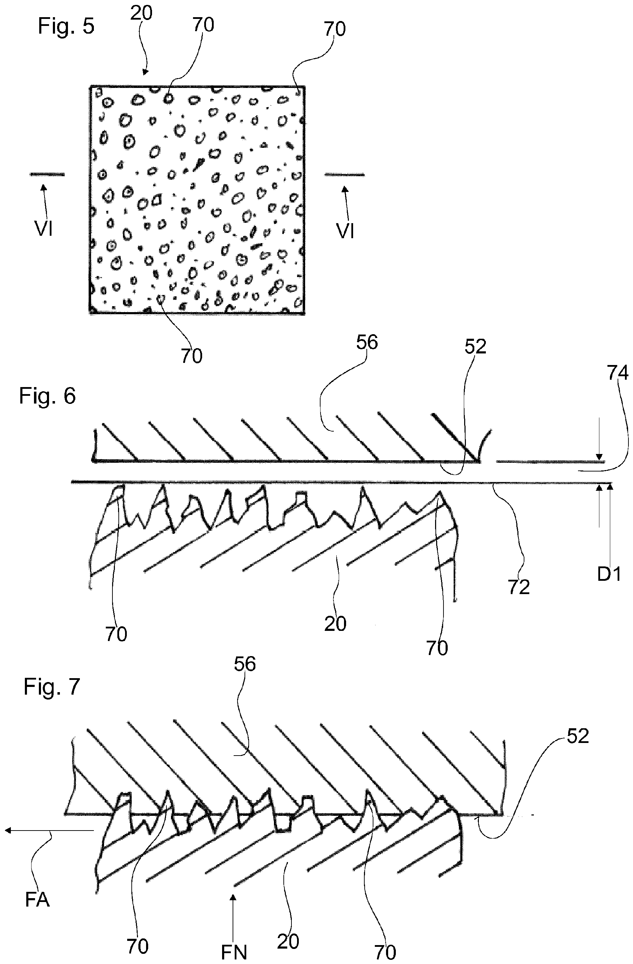

Figur 5 zeigt in stark vergrößertem Maßstab einen Blick in radialer Richtung auf die Oberfläche der Konushülse 20. Der Ausschnitt ist quadratisch. Die Kantenlänge liegt üblicherweise bei 150 µm, sie liegt im Bereich von 0,1 bis 800 µm, typischerweise liegt sie bei 0,3 mm. Die Darstellung ist prinzipiell zu verstehen, gezeigt sind eine Vielzahl von Profilspitzen 70, die nach oben aus der Zeichenebene herausragen. Aus diesem Bild ist auch der Abstand der einzelnen Profilspitzen 70 ersichtlich, also der Abstand zum nächsten Nachbarn. Dieser liegt typischerweise im Bereich der Körnung. Das Bild ist beispielhaft zu verstehen. Ein ähnliches Bild ergibt sich, wenn man senkrecht auf ein Schleifpapier der angegebenen Körnungen schaut.

Aus Figur 6 sind die Profilspitzen 70 im Schnittbild ersichtlich. Figur 6 ist so zu verstehen, dass die in Blickrichtung dahinterliegenden Profilspitzen usw. nicht dargestellt sind, sondern nur mehr oder weniger die Querschnittsfläche. Es handelt sich um eine Prinzipdarstellung. Der Abstand zwischen benachbarten Spitzen liegt im Bereich von 50 bis 500 µm. Oberhalb der Konushülse 20 mit den Profilspitzen 70 ist im gleichen Maßstab die Innenwand einer Bohrung 52 in einem ersten Bauteil 56 dargestellt. Die Innenwand ist idealisiert als Gerade dargestellt, tatsächlich hat sie eine gewisse Rauheit. Eine Linie 72 ist die Linie 72 der Profilkuppen bzw. -spitzen 70. Zwischen dieser Linie 72 und der genannten Geraden, also der Begrenzungslinie der Bohrung 52, besteht ein Fügespalt 74.

Figur 7 zeigt den gespannten Zustand. Anders als in Figur 6 ist die Konushülse 20 nun radial gespannt. Durch die radiale Expansion haben sich die Profilspitzen 70 in das Material der Innenwandung der Bohrung 52 eingegraben. Dadurch ist ein Formschluss entstanden. Die Profilspitzen 70 sind mindestens drei µm, vorzugsweise mindestens fünf µm und besonders bevorzugt mindestens zehn µm in das Material des ersten Bauteils 56 eingedrungen. Sie haben das Material der Bohrung plastisch verformt. Die Konushülse 20 ist mit der Normalkraft F_{N} gegen die als stationär betrachtete Innenwand der Bohrung 52 gepresst. Durch den Formeingriff wird (in analoger Anwendung) ein Reibungskoeffizient µ_{H} größer als 1 erreicht. Eine axiale Kraft F_{A} kann daher einen zumindest gleichen Wert wie F_{N} haben ohne dass das formschlüssige Verbindungselement aus der Bohrung 52 herausgezogen wird. Die Kraft F_{A} wirkt dabei an der Konushülse 20, denn das Bauteil 56 ist als stationär, z.B. fest eingespannt, betrachtet. Der Reibungskoeffizient wird auch als Reibwert oder Reibungswert bezeichnet.

In der Darstellung gemäß Figur 6 begrenzt die Linie 72 einen Durchmesser, der D1 entspricht. Im gespannten Zustand ist der Durchmesser größer, er beträgt nun D2, sieh Fig. 7.

Es muss grundsätzliche die Voraussetzung, dass die Oberfläche der Konushülse 20 härter ist als das Material an der Innenwand der Bohrung 52 und 54, erfüllt sein.

### Bezugszeichen

- 20: Konushülse
- 22: Längsachse
- 24: Innenmantel
- 26: zylindrischer Außenmantel
- 30: Kegelbolzen
- 32: Kegelmantel
- 34: 1. Kupplungsteil
- 36: Ölbohrung
- 38: Rinne
- 40: Spannvorrichtung
- 42: Anschluss
- 44: Kolben
- 46: 2. Kupplungsteil
- 48: Anlagering, Gegenabstützfläche
- 50: Abstützfläche
- 52: 1. Bohrung
- 54: 2. Bohrung
- 56: 1. Bauteil
- 58: 2. Bauteil
- 60: Schutzkappe
- 62: umlaufender Rand (von 60)
- 66: Lösevorrichtung
- 70: Profilspitzen
- 72: Linie
- 74: Fügespalt
- D1: Außendurchmesser Konushülse entspannt
- D2: Außendurchmesser Konushülse gespannt

## Patentansprüche

1. Einheit aus a) einem formschlüssigen, demontierbaren Verbindungselement für Bauteilverbindungen,
- das eine Konushülse (20), die eine Längsachse (22) der Konushülse (20), die einen konischen Innenmantel (24), die eine quer zur Längsachse (22) verlaufende Abstützfläche, und die einen zylindrischen Außenmantel hat, welcher eine strukturierte, raue Oberfläche mit Profilspitzen (70) aufweist,
- und das einen Kegelbolzen (30) aufweist, der einen äußeren Kegelmantel (32), welcher in flächigem Kontakt mit dem konischen Innenmantel (24) ist, und der ein erstes Kupplungsteil (34) hat,
aus b) einer axialen Spannvorrichtung (40), die ein zweites Kupplungsteil (46), das mit dem ersten Kupplungsteil (34) lösbar verbindbar ist, und die eine Gegenabstützfläche, die mit der Abstützfläche in Kontakt ist, aufweist, wobei das zweite Kupplungsteil (46) relativ zur Gegenabstützfläche axial bewegbar ist und bei einem Spannvorgang eine Relativbewegung zwischen Kegelbolzen (30) und Konushülse (20) stattfindet, wobei sich die Konushülse (20) zwischen einer Anfangsposition vor dem Spannvorgang und einer Spannposition im elastischen Bereich verformt, dabei hat in der Anfangsposition der Außendurchmesser des zylindrischen Außenmantels einen Wert D1 und in der Spannposition einen Wert D2, wobei D2 größer als D1 ist,
und aus c) einem ersten Bauteil (56), das eine erste Bohrung (52) aufweist, in der sich das Verbindungselement befindet, wobei der Innendurchmesser der ersten Bohrung (52) größer als D1, aber kleiner als D2 ist, und wobei im angespannten Zustand des formschlüssigen Verbindungselementes die Profilspitzen (70) in plastischem Eingriff in das Material der ersten Bohrung befinden und mindestens 3 Mikrometer, vorzugsweise mindestens 5 Mikrometer in das Material an der Innenwand der ersten Bohrung (52) eingedrungen sind, wobei die Oberfläche des Außenmantels (26) härter ist als das Material der ersten Bohrung (52),
**dadurch gekennzeichnet, dass** die raue Oberfläche dadurch definiert ist, dass sie einer Oberfläche entspricht, wie sie Schleifpapier mit einer Körnung zwischen 50 und 1500, insbesondere zwischen 80 und 1000, Körnungsangabe nach CAMI, aufweist.

2. Einheit nach Anspruch 1, **dadurch gekennzeichnet, dass** das formschlüssige Verbindungselement weiterhin mindestens eine Schutzkappe (60) aufweist, die an einem axialen Ende der Konushülse (20) und/oder des Kegelbolzens (30) anliegt und einen Außendurchmesser hat, der nicht größer ist als D1, vorzugsweise ist die Schutzkappe (60) mit dem Kegelbolzen (30) verschraubt.

3. Einheit nach einem der vorangegangenen Ansprüche, **dadurch gekennzeichnet, dass** die Konushülse (20) eine axial zugängliche Ölbohrung (36) aufweist, die einen Einlass hat und die mindestens einen Austrittbereich hat, der auf dem Kegelmantel (32) angeordnet ist, vorzugsweise ist die Austrittsöffnung durch mindestens eine peripher umlaufende Rinne (38), die auf dem äußeren Kegelmantel (32) ausgebildet ist, realisiert,

4. Einheit nach Anspruch 3, **dadurch gekennzeichnet, dass** das formschlüssige Verbindungselement weiterhin eine Lösevorrichtung (66) aufweist, die einen Anschluss (42) für den Einlass und ein dem zweiten Kupplungsteil (46) entsprechendes Kupplungsteil (46) der Lösevorrichtung (66) aufweist.

5. Einheit nach einem der vorangegangenen Ansprüche, **dadurch gekennzeichnet, dass** sie ein zweites Bauteil (58) aufweist, dass das zweite Bauteil (58) eine zweite Bohrung (54) hat, und dass sich das formschlüssige Verbindungselement auch in der zweiten Bohrung (54) befindet.

6. Einheit nach Anspruch 5, **dadurch gekennzeichnet, dass** die zweite Bohrung (54) eine Sackbohrung ist.

7. Einheit nach einem der Ansprüche 5 oder 6, **dadurch gekennzeichnet, dass** die erste und die zweite Bohrung (52, 54) mit glatter Bohrungswand und/oder zylindrisch hergestellt sind.

8. Einheit nach Anspruch 7, **dadurch gekennzeichnet, dass** sich das formschlüssige Verbindungselement innerhalb der mindestens einen Bohrung (52, 54) befindet und nicht über Enden der mindestens einen Bohrung (52, 54) hinausragt.

9. Einheit nach Anspruch 1, **dadurch gekennzeichnet, dass** sie weiterhin eine Lösevorrichtung (66) aufweist, und dass die Konushülse (20) nach Lösen durch die Lösevorrichtung (66) wieder ihren Durchmesser D1 hat.

10. Einheit nach Anspruch 1, **dadurch gekennzeichnet, dass** die Konushülse (20) im gespannten Zustand nur innerhalb des elastischen Bereichs (gemäß Hooke'schem Gesetz) verformt ist.

11. Einheit nach Anspruch 1, **dadurch gekennzeichnet, dass** bei Rückbewegung des Kegelbolzens (30) die Konushülse (20) wieder die Form annimmt, die sie vor dem Spannvorgang hatte.

12. Einheit nach Anspruch 1, **dadurch gekennzeichnet, dass** der radiale Weg D2 minus D1 größer ist als die mittlere Rauhtiefe, vorzugsweise mindestens doppelt so groß, insbesondere vierfach so groß ist.

13. Einheit nach Anspruch 1, **dadurch gekennzeichnet, dass** sie mindestens 20 Profilspitzen (70) pro Quadratmillimeter aufweist.

14. Formschlüssiges Verbindungselement für Bauteilverbindungen, das
- eine Konushülse (20), die eine Längsachse (22) der Konushülse (20), die einen konischen Innenmantel (24), die eine quer zur Längsachse (22) verlaufende Abstützfläche, und die einen zylindrischen Außenmantel hat, welcher eine strukturierte, raue Oberfläche mit Profilspitzen aufweist, und
- einen Kegelbolzen (30) aufweist, der einen äußeren Kegelmantel (32), welcher in flächigem Kontakt mit dem konischen Innenmantel (24) ist, und der ein erstes Kupplungsteil (34) hat, dabei wird die raue Oberfläche definiert dadurch, dass sie einer Oberfläche entspricht, wie sie Schleifpapier mit einer Körnung zwischen 50 und 1500, insbesondere zwischen 80 und 1000, Körnungsangabe nach CAMI, aufweist.

## Claims

1. A unit comprised of a) a positive, demountable connection element for component connections,
- which has a cone sleeve (20) having a longitudinal axis (22) of the cone sleeve (20), a conical inner jacket (24), a support surface running transverse to the longitudinal axis (22), and a cylindrical outer jacket, which has a structured, rough surface with profile peaks (70),
- and which has a taper pin (30) having an outer cone jacket (32) that is in flat contact with the conical inner jacket (24), and which has a first coupling part (34),
of b) an axial tensioning device (40), which has a second coupling part (46) that can be detachably connected with the first coupling part (34), and which has a counter-support surface that is in contact with the support surface, wherein the second coupling part (46) can be axially moved relative to the counter-support surface and, during a tensioning process, a relative movement takes place between the taper pin (30) and cone sleeve (20), wherein the cone sleeve (20) deforms between an initial position before the tensioning process and a tensioned position in the elastic area, wherein the outer diameter of the cylindrical outer jacket has a value D1 in the initial position, and a value D2 in the tensioned position, wherein D2 is greater than D1,
and of c) a first component (56),
- which has a first bore (52) in which the connection element is located, wherein the inner diameter of the first bore (52) is larger than D1, but smaller than D2, and wherein, in the tensioned state of the positive connection element, the profile peaks (70) are plastically engaged in the material of the first bore, and have penetrated at least 3 micrometers, preferably at least 5 micrometers, into the material on the inner wall of the first bore (52), wherein the surface of the outer jacket (26) is harder than the material of the first bore (52),
**characterized in that** the rough surface is defined by the fact that it corresponds to a surface exhibited by sandpaper with a grain of between 50 and 1500, in particular between 80 and 1000, grain size according to CAMI.

2. The unit according to claim 1, **characterized in that** the positive connection element further has at least one protective cap (60), which abuts against an axial end of the cone sleeve (20) and/or the taper pin (30), and has an outer diameter that is not greater than D1, with the protective cap (60) preferably being screwed with the taper pin (30).

3. The unit according to one of the preceding claims, **characterized in that** the cone sleeve (20) has an axially accessible oil bore (36), which has an inlet and has at least one outlet area, which is arranged on the cone jacket (32), with the outlet opening preferably being realized by at least one peripherally circulating channel (38) formed on the outer cone jacket (32).

4. The unit according to claim 3, **characterized in that** the positive connection element further has a releasing device (66), which has a port (42) for the inlet and a coupling part (46) of the releasing device (66) corresponding to the second coupling part (46).

5. The unit according to one of the preceding claims, **characterized in that** it has a second component (58), that the second component (58) has a second bore (54), and that the positive connection element is also located in the second bore (54).

6. The unit according to claim 5, **characterized in that** the second bore (54) is a blind hole.

7. The unit according to one of claims 5 or 6, **characterized in that** the first and second bores (52, 54) are produced with a smooth bore wall and/or cylindrically.

8. The unit according to claim 7, **characterized in that** the positive connection element is located inside of the at least one bore (52, 54), and does not protrude over ends of the at least one bore (52, 54).

9. The unit according to claim 1, **characterized in that** it further has a releasing device (66), and that the cone sleeve (20) again has its diameter D1 after released by the releasing device (66).

10. The unit according to claim 1, **characterized in that**, in the tensioned state, the cone sleeve (20) is only deformed inside of the elastic area (according to Hook's law).

11. The unit according to claim 1, **characterized in that** the cone sleeve (20) again assumes the shape it had before the tensioning process when the taper pin (30) moves back.

12. The unit according to claim 1, **characterized in that** the radial path D2 minus D1 is larger than the average roughness, preferably at least twice as large, in particular four times as large.

13. The unit according to claim 1, **characterized in that** it has at least 20 profile peaks (70) per square millimeter.

14. A positive connection element for component connections, which
- has a cone sleeve (20) having a longitudinal axis (22) of the cone sleeve (20), a conical inner jacket (24), a support surface running transverse to the longitudinal axis (22), and a cylindrical outer jacket, which has a structured, rough surface with profile peaks (70), and
- a taper pin (30) having an outer cone jacket (32) that is in flat contact with the conical inner jacket (24), and which has a first coupling part (34), wherein the rough surface is defined by the fact that it corresponds to a surface exhibited by sandpaper with a grain of between 50 and 1500, in particular between 80 and 1000, grain size according to CAMI.

## Revendications

1. Unité constituée de **a**) un élément de liaison par conformité de forme, démontable pour des liaisons d'élément de construction,
- qui possède un manchon conique (20), qui comporte un axe longitudinal (22) du manchon conique (20), qui a une enveloppe intérieure conique (24), qui a une surface d'appui passant transversalement à l'axe longitudinal (22) et qui a une enveloppe extérieure cylindrique, laquelle comporte une surface structurée, brute avec des pointes profilées (70),
- et qui comporte un boulon conique (30), qui possède une enveloppe conique extérieure (32), laquelle est en contact sur toute la surface avec l'enveloppe intérieure conique (24) et qui a une première partie d'accouplement (34),
de b) un dispositif de serrage axial (40), qui comporte une deuxième partie d'accouplement (46), qui peut être reliée pouvant être desserrée à la première partie d'accouplement (34) et qui comporte une surface d'appui opposée, qui est en contact avec la surface d'appui, sachant que la deuxième partie d'accouplement (46) peut être axialement déplacée par rapport à la surface d'appui opposée et un mouvement relatif a lieu lors d'une opération de serrage entre le boulon conique (30) et le manchon conique (20), sachant que le manchon conique (20) se déforme dans une zone élastique entre une position initiale avant l'opération de serrage et une position de serrage, le diamètre extérieur de l'enveloppe extérieure cylindrique ayant à cet effet dans la position initiale une valeur D1 et dans la position de serrage une valeur D2, sachant que D2 est plus grande que D1,
et de c) un premier élément de construction (56) qui comporte un premier trou (52), dans lequel se trouve l'élément de liaison, sachant que le diamètre intérieur du premier trou (52) est plus grand que D1, mais plus petit que D2 et sachant qu'à l'état serré de l'élément de liaison par conformité de forme, les pointes profilées (70) se trouvent en prise plastique dans le matériau du premier trou et sont enfoncées d'au moins 3 microns, de préférence d'au moins 5 microns, dans le matériau sur la paroi intérieure du premier trou (52), sachant que la surface de l'enveloppe extérieure (26) est plus dure que le matériau du premier trou (52),
**caractérisée en ce que** la surface brute est définie par le fait qu'elle correspond à une surface, telle que comporte un papier abrasif avec une granularité variant entre 50 et 1500, en particulier entre 80 et 1000, indication de granularité selon le CAMI.

2. Unité selon la revendication 1, **caractérisé en ce que** l'élément de liaison par conformité de forme comporte au moins en plus un chapeau de protection (60), qui vient s'appliquer sur une extrémité axiale du manchon conique (20) et/ou du boulon conique (30) et possède un diamètre extérieur qui n'est pas plus grand que D1, le chapeau de protection (60) étant de préférence vissé au boulon conique (30).

3. Unité selon l'une quelconque des revendications précédentes, **caractérisée en ce que** le manchon conique (20) comporte un trou d'huile (36) axialement accessible, qui possède une entrée et qui a au moins une zone de sortie, qui est disposée sur l'enveloppe conique (32), l'ouverture de sortie étant réalisée de préférence par au moins un conduit (38) passant périphériquement, qui est constitué sur l'enveloppe conique extérieure (32).

4. Unité selon la revendication 3, **caractérisée en ce que** l'élément de liaison par conformité de forme comporte en plus un dispositif de desserrage (66), qui comporte un raccord (42) pour l'entrée et une partie d'accouplement (46) du dispositif de desserrage (66) correspondant à la deuxième partie d'accouplement (46).

5. Unité selon l'une quelconque des revendications précédentes, **caractérisée en ce qu'**elle comporte un deuxième élément de construction (58), **en ce que** le deuxième élément de construction (58) possède un deuxième trou (54) et **en ce que** l'élément de liaison par conformité de forme se trouve également dans le deuxième trou (54).

6. Unité selon la revendication 5, **caractérisée en ce que** le deuxième trou (54) est un trou borgne.

7. Unité selon l'une quelconque des revendications 5 ou 6, **caractérisée en ce que** le premier et le deuxième trou (52, 54) sont fabriqués avec une paroi de trou lisse et/ou cylindriques.

8. Unité selon la revendication 7, **caractérisée en ce que** l'élément de liaison par conformité de forme se trouve à l'intérieur d'au moins un trou (52, 54) et ne dépasse pas des extrémités d'au moins un trou (52, 54).

9. Unité selon la revendication 1, **caractérisée en ce qu'**elle comporte en plus un dispositif de desserrage (66) et **en ce que** le manchon conique (20) a à nouveau son diamètre D1 après desserrage par le dispositif de desserrage (66).

10. Unité selon la revendication 1, **caractérisée en ce que** le manchon conique (20) n'est déformé à l'état serré qu'à l'intérieur de la zone élastique (selon la Loi de Hooke).

11. Unité selon la revendication 1, **caractérisée en ce que** le manchon conique (20) adopte à nouveau la forme qu'il avait avant l'opération de serrage lors du mouvement de recul du boulon conique (30).

12. Unité selon la revendication 1, **caractérisée en ce que** la course radiale D2 moins D1 est plus grande que la profondeur brute moyenne, de préférence au moins deux fois aussi grande, en particulier quatre fois aussi grande.

13. Unité selon la revendication 1, **caractérisée en ce qu'**elle comporte moins 20 pointes profilées (70) par millimètre carré.

14. Elément de liaison par conformité de forme pour des liaisons d'éléments de construction qui comporte
- un manchon conique (20), qui possède un axe longitudinal (22) du manchon conique (20), qui a une enveloppe intérieure (24) conique, qui a une surface d'appui passant transversalement à l'axe longitudinal (22) et qui a une enveloppe extérieure cylindrique, laquelle comporte une surface structurée, brute avec des pointes profilées, et
- comporte un boulon conique (30) qui possède une enveloppe conique extérieure (32), laquelle est en contact sur toute la surface avec l'enveloppe intérieure conique (24) et qui a une première partie d'accouplement (34), la surface brute étant définie à cet effet par le fait qu'elle correspond à une surface, telle que comporte un papier abrasif avec une granularité variant entre 50 et 1500, en particulier entre 80 et 1000, indication de granularité selon le CAMI.
